# FASCICULE DE BREVET EUROPEEN

(11) **EP 3 063 066 B1**
(45) Date de publication et mention de la délivrance du brevet: **18.10.2017**
(21) Numéro de dépôt: 14825379.2
(22) Date de dépôt: 28.10.2014
(51) Int. Cl.: B64D 37/32, A62C 3/08

(54) **PROCEDE ET DISPOSITIF D'INERTAGE D'UN RESERVOIR DE CARBURANT**
VERFAHREN UND VORRICHTUNG ZUR INERTISIERUNG EINES KRAFTSTOFFTANKS
METHOD AND DEVICE FOR INERTING A FUEL TANK

(30) Priorité: 31.10.2013 FR 1360724
(43) Date de publication de la demande: 07.09.2016
(73) Titulaire: Zodiac Aerotechnics, 42230 Roche La Moliere (FR)
(72) Inventeur: ARTAUD, Benoît, F-42000 Saint-Etienne (FR); CLARIS, Christophe, 42170 Saint-Just-Saint-Rambert (FR); VANDROUX, Olivier, F-38100 Grenoble (FR); VOZY, Thibaut, F-69510 Soucieu en Jarrest (FR)
(74) Mandataire: Cabinet Laurent & Charras
(86) Numéro de dépôt international: PCT/FR2014/052733
(87) Numéro de publication internationale: WO 2015/063406

(56) Documents cités:
- EP-A1- 2 233 175
- WO-A2-2009/141400
- WO-A2-2012/076373
- US-A- 4 378 920
- US-A1- 2007 023 577
- US-A1- 2012 035 406
- US-A1- 2012 325 811

## Description

### DOMAINE TECHNIQUE

La présente invention concerne un procédé et un dispositif d'inertage d'un réservoir de carburant d'un aéronef, tel qu'un avion, un hélicoptère ou analogue.

### ART ANTERIEUR

Dans le domaine de l'aéronautique, il est bien connu d'utiliser des systèmes d'inertage pour générer et introduire de l'azote, ou tout autre gaz neutre tel que le dioxyde de carbone par exemple, dans les réservoirs de carburant pour des raisons de sécurité afin de réduire le risque d'explosion de carburant.

Ces systèmes d'inertage sont également connus sous le terme OBIGGS selon l'acronyme anglo-saxon « *On Board Inert Gas Generation Systems ».*

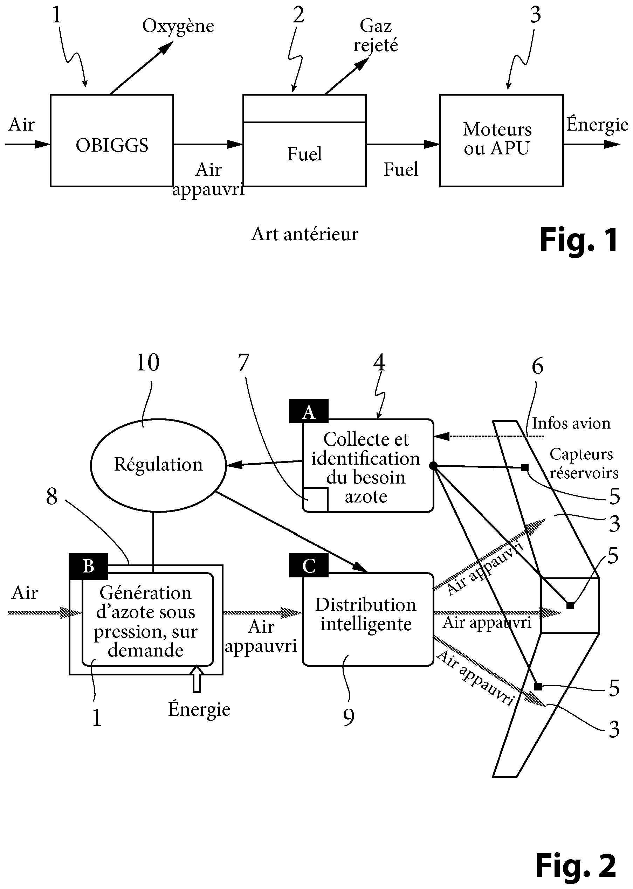

Un système classique d'inertage de l'art antérieur est représenté sur la figure 1. Le système d'inertage comporte un système embarqué de génération de gaz inerte dit OBIGGS (1) alimenté en air avec de l'air de purge détourné de moteurs. En effet, l'air de purge détourné de moteurs est actuellement le modèle le plus largement utilisé. Dans de tels systèmes, la purge d'air est généralement déviée à partir d'un ou plusieurs moteurs à partir de l'ouverture dite de pression intermédiaire et/ou de l'ouverture dite de haute pression en fonction de la situation de vol. On notera que l'utilisation de purge d'air pour le conditionnement d'air est avantageuse car la purge d'air a une pression relativement élevée, ainsi qu'une température relativement élevée, de sorte que l'air peut être ajusté sur une large gamme de pressions et de températures désirées. Le système OBIGGS (1) est couplé au réservoir de carburant (2) de l'avion et sépare l'oxygène de l'air.

Le système OBIGGS (1) est généralement constitué d'un module de séparation de l'air qui contient, par exemple, des membranes de zéolithe à travers lesquelles un flux d'air est pressé. En raison des différents taux de transfert de masse de l'azote et de l'oxygène, le système divise le flux d'air de telle sorte qu'un flux d'air à forte teneur en azote et un flux d'air à forte teneur en oxygène sont obtenus. La fraction d'air enrichi en azote est acheminée dans les réservoirs de carburant de telle sorte que le mélange d'air et de vapeur de kérosène présent dans cet emplacement est déplacé. La fraction de l'air enrichi en oxygène n'est généralement pas réutilisée. Alternativement, la fraction de l'air enrichi en oxygène est réintroduite dans la cabine des passagers après avoir été traitée avec des moyens appropriés et/ou dans la chambre de combustion des réacteurs afin d'améliorer la combustion. Les dispositifs nécessaires à cette opération tels que des compresseurs, des filtres, des modules de refroidissement à air, des eaux et analogues sont intégrés dans l'installation de gaz inerte. Ces dispositifs de traitement de l'air enrichi en oxygène créent un surcoût et augmentent le poids et l'encombrement des dispositifs d'inertage.

Ainsi, l'oxygène peut alors être libéré du système l'OBIGGS (1), et l'air appauvri en oxygène peut être envoyé dans le réservoir de carburant (2) et plus particulièrement dans la partie vide dudit réservoir pour évacuer le mélange d'air et de vapeur de kérosène à l'extérieur du réservoir (2). Le carburant peut alors être envoyé vers les moteurs ou à l'unité de puissance auxiliaire dite APU (3) selon l'acronyme anglo-saxon « *Auxiliary Power Unit* », générant ainsi de l'énergie. Ainsi, Lorsque le ratio entre le carburant et l'oxygène, dans la partie vide du réservoir (2) est inférieur à la limite d'inflammation définie conformément aux exigences de la FAA selon l'acronyme anglo-saxon «Fédéral Aviation Administration» détaillées dans le document AC25.981-2A en date du 19 septembre 2008 et intitulé « FUEL TANK FLAMMABILITY REDUCTION MEANS » et ses annexes, aucune inflammation spontanée ne peut avoir lieu.

Alternativement, les systèmes d'inertage peuvent également être alimentés par de l'air extrait de la cabine passagers de l'avion ou par de l'air venant de l'extérieur de l'appareil. L'air dans la cabine des passagers est régulièrement renouvelé en fournissant la cabine en air frais et en évacuant simultanément l'air vicié de la cabine.

De nombreux systèmes d'inertage ont été décrits dans l'art antérieur. C'est le cas notamment du brevet américain US 7,172,156 qui décrit une installation de gaz inerte qui est alimenté en air de purge de moteurs d'avions. La purge d'air est préalablement conditionnée avec des filtres et des échangeurs de chaleur avant d'atteindre le module de séparation d'air. La fraction d'air enrichi en azote est acheminée vers les réservoirs de carburant et la fraction d'air enrichi en oxygène est évacuée dans l'environnement extérieur de l'avion. Le système d'inertage comporte également un compresseur et une turbine qui conduisent à une grande complexité de l'installation du système d'inertage et qui grèvent son poids.

On connait également le document WO 2012076373 qui décrit un système générateur de gaz inerte embarqué. Ledit système reçoit l'air de la cabine des passagers, ou de l'air d'une autre source à relativement basse pression, passe une partie de celui-ci à travers une turbine de récupération d'énergie vers l'air ambiant pour extraire l'énergie utilisée pour fournir toute ou partie de l'énergie nécessaire pour entraîner un compresseur volumétrique pour comprimer une autre partie de l'air cabine pour augmenter sa pression afin qu'elle soit appropriée pour l'alimentation d'un module de séparation de l'air (24). L'air comprimé est ensuite refroidi et fourni au module de séparation de l'air, pour générer de l'air enrichi en azote à des fins d'inertage. L'air cabine peut être utilisé comme air de refroidissement pour le processus de chauffage d'un échangeur de chaleur qui extrait la chaleur de l'air cabine comprimé avant de le fournir au module de séparation de l'air. La turbine de récupération d'énergie peut entraîner un compresseur volumétrique directement, ou peut entraîner un générateur dont l'énergie est utilisée, éventuellement en association avec l'énergie de la source d'énergie de l'avion, pour entraîner un moteur électrique qui entraîne le compresseur volumétrique.

Enfin, on connaît également la demande de brevet américain US 2011/062288 décrivant un système d'inertage destiné à un avion. Ledit système d'inertage comprend un module séparateur d'air qui présente au moins une entrée d'air, une première sortie d'air et une deuxième sortie d'air. Le module séparateur d'air est réalisé de manière à diviser un flux d'air entrant en un premier flux d'air et en un deuxième flux d'air, le premier flux d'air étant enrichi en oxygène par rapport au flux d'air entrant et étant évacué par la première sortie d'air et le deuxième flux d'air étant enrichi en azote par rapport au flux d'air entrant et étant évacué par la deuxième sortie d'air. Le système d'inertage selon l'invention se caractérise par rapport aux systèmes d'inertage connus en ce que l'entrée d'air peut être raccordée à un point de prélèvement d'air dans un système de conditionnement d'air et en ce que le système d'inertage est conçu pour conduire le premier flux d'air dans une cabine à climatiser. Le document EP2233175A1 décrit tous les caractéristiques du préambule de la revendication 1. Tous ces système d'inertage présentent l'inconvénient de consommer énormément d'énergie en produisant de l'air appauvri au maximum de la capacité du générateur de gaz inerte OBIGGS et ce quel que soit le besoin réel du ou des réservoirs de carburant. Ces systèmes d'inertage, outre leur consommation énergétique importante, sont surdimensionnés et augmentent inutilement la masse embarquée sur l'avion.

### EXPOSE DE L'INVENTION

L'un des buts de l'invention est donc de remédier à ces inconvénients en proposant un dispositif et un procédé d'inertage d'un réservoir de carburant d'un aéronef ou analogue de conception simple et peu onéreuse, et permettant d'adapter la distribution de gaz inerte au besoin réel en gaz inerte afin notamment de réduire indirectement la consommation de carburant.

A cet effet et conformément à l'invention, il est proposé un dispositif d'inertage d'un ou plusieurs réservoirs de carburant d'un aéronef, ledit dispositif comprenant au moins :
- un générateur de gaz inerte alimenté avec de l'air de purge détourné de moteurs et/ou de l'air de la cabine des passagers,
- des moyens de détermination du besoin en gaz inerte du ou des réservoirs de l'aéronef en temps réel au cours de l'utilisation dudit aéronef,
- des moyens de régulation du débit du générateur de gaz inerte,
- des moyens de distribution contrôlée du gaz inerte dans les différents réservoirs et/ou dans différents compartiments d'un réservoir et,
- une unité de gestion, d'une part, apte à déterminer en temps réel une consigne de débit du générateur de gaz inerte en fonction du besoin en gaz inerte du ou des réservoirs transmis par les moyens de détermination, ladite consigne étant transmise en temps réel aux moyens de régulation, et d'autre part, apte à déterminer des consignes de contrôle de la distribution en gaz inerte dans les différents réservoirs et/ou dans différents compartiments d'un réservoir, lesdites consignes étant transmises en temps réel auxdits moyens de distribution contrôlée.

Selon une caractéristique de l'invention, les moyens de détermination comprennent :
- une pluralité de capteurs aptes à mesurer en temps réel, dans le ou les réservoirs et/ou dans différents compartiments d'un réservoir, le volume de carburant, et/ou la quantité d'oxygène, et/ou la température,
- des moyens de traitement des informations relatives au vol de l'aéronef et,
- des moyens de calcul du besoin en gaz inerte en fonction, des mesures issues des capteurs, et des informations relatives au vol de l'aéronef.

On comprend bien que, contrairement aux dispositifs d'inertage de l'art antérieur qui distribuent en permanence un gaz inerte, tel que de l'azote ou de l'air appauvri en oxygène, au maximum des capacités du dispositif de génération de gaz inerte, le dispositif suivant l'invention permet d'adapter la distribution de gaz inerte au besoin réel en gaz inerte. De cette manière, le dispositif suivant l'invention permet de réduire indirectement la consommation de carburant.

Lesdites informations relatives au vol de l'aéronef consistent dans l'altitude de l'aéronef et/ou la vitesse de l'aéronef et/ou la phase de vol dudit aéronef.

De préférence, le générateur de gaz inerte consiste en un générateur de gaz à membrane de séparation en zéolithe et/ou en une pile à combustible.

Par ailleurs, les moyens de régulation du débit de gaz inerte du générateur de gaz inerte et de la consommation en énergie dudit générateur de gaz inerte sont connectés à une source de pression.

Ladite source de pression consiste dans une pression venant du réacteur de l'aéronef et/ou un compresseur électrique et/ou un turbocompresseur.

De plus, l'unité de gestion comporte un premier algorithme pour déterminer en temps réel une consigne du débit de gaz inerte du générateur de gaz inerte en fonction du besoin en gaz inerte du ou des réservoirs de l'aéronef transmis par les moyens de détermination du besoin en gaz inerte, lesdites consignes étant transmises en temps réel aux moyens de régulation du débit de gaz inerte du générateur de gaz inerte, et un second algorithme pour déterminer les consignes de contrôle de la distribution en gaz inerte auxdits moyens de distribution contrôlée du gaz inerte dans les différents réservoirs de carburant et/ou dans les différents compartiments d'un réservoir de carburant de l'aéronef.

Accessoirement, le premier algorithme permet de déterminer en temps réel une consigne de la consommation énergétique du générateur de gaz inerte en fonction du besoin en gaz inerte du ou des réservoirs de l'aéronef transmis par les moyens de détermination du besoin en gaz inerte.

Un autre objet de l'invention concerne un procédé d'inertage d'un ou plusieurs réservoirs de carburant d'un aéronef, tel qu'un avion ou un hélicoptère par exemple, ou analogue comprenant au moins un générateur de gaz inerte dit OBIGGS alimenté en air avec de l'air de purge détourné de moteurs et/ou de l'air de la cabine des passagers et/ou par de l'air venant de l'extérieur de l'appareil ; ledit procédé est remarquable en ce qu'il comporte au moins les étapes suivantes de :
i) détermination en temps réel du besoin en gaz inerte du ou des réservoirs au cours de l'utilisation dudit aéronef
ii) détermination en temps réel d'une consigne de débit du générateur de gaz inerte en fonction du besoin en gaz inerte du ou des réservoirs, transmis par des moyens de détermination du besoin en gaz inerte, et précédemment calculé en fonction de mesure en temps réel, dans le ou les réservoirs et/ou dans différents compartiments d'un réservoir, du volume de carburant, et/ou de la quantité d'oxygène, et/ou de la température, et des informations relatives au vol de l'aéronef, lesdites consignes étant transmises en temps réel à des moyens de régulation du débit du générateur de gaz inerte,
iii) détermination de consignes de contrôle de la distribution en gaz inerte dans les différents réservoirs et/ou dans différents compartiments d'un réservoir, lesdites consignes étant transmises en temps réel à des moyens de distribution contrôlée du gaz inerte dans les différents réservoirs et/ou dans différents compartiments d'un réservoir.

### DESCRIPTION SOMMAIRE DES FIGURES

D'autres avantages et caractéristiques ressortiront mieux de la description qui va suivre d'une unique variante d'exécution, donnée à titre d'exemple non limitatif, du procédé et du dispositif d'inertage d'un réservoir de carburant conformes à l'invention, en référence aux dessins annexés sur lesquels :
- la figure 1 est une représentation schématique d'un système d'inertage de l'art antérieur,
- la figure 2 est une représentation schématique du système d'inertage suivant l'invention.

### DESCRIPTION DETAILLEE DE L'INVENTION

En référence à la figure 2, le dispositif d'inertage d'un réservoir de carburant d'un aéronef, tel qu'un avion ou un hélicoptère par exemple, ou analogue suivant l'invention comprend un générateur de gaz inerte dit OBIGGS (1) alimenté en air avec de l'air de purge détourné de moteurs et/ou de l'air de la cabine des passagers par exemple. Ledit générateur de gaz inerte (1) comporte une sortie d'air appauvri. Ledit générateur de gaz inerte pourra consister dans tout générateur de gaz inerte (1) bien connu de l'homme du métier tel qu'un générateur de gaz à membrane de séparation en zéolithe et/ou en une pile à combustible par exemple.

Il va de soi que le dispositif pourra comprendre une pluralité de générateur de gaz inerte (1) montés en série ou en parallèle sans pour autant sortir du cadre de l'invention.

Par ailleurs, le dispositif suivant l'invention comporte des moyens de détermination (4) du besoin en gaz inerte du ou des réservoirs (3) de l'aéronef en temps réel au cours de l'utilisation dudit aéronef. Lesdits moyens de détermination (4) du besoin en gaz inerte du ou des réservoirs (3) de l'aéronef en temps réel au cours de l'utilisation dudit aéronef comprennent une pluralité de capteurs (5) aptes à mesurer en temps réel le volume de carburant présent dans le ou les réservoirs (3) et/ou dans les différents compartiments d'un réservoir (3) et/ou la quantité d'oxygène présente dans le ou les réservoirs (3) et/ou dans les différents compartiments d'un réservoir (3), et/ou de la température, des moyens de traitement (6) des informations relatives au vol de l'aéronef et des moyens de calcul (7) du besoin en gaz inerte en fonction des mesures du volume de carburant présent dans le ou les réservoirs (3) et/ou dans les différents compartiments d'un réservoir (3) et/ou de la quantité d'oxygène présente dans le ou les réservoirs (3) et/ou dans les différents compartiments d'un réservoir (3), et/ou la température, et des informations relatives au vol de l'aéronef. Lesdites informations relatives au vol de l'aéronef consistent par exemple dans l'altitude de l'aéronef et/ou la vitesse de l'aéronef et/ou la phase de vol dudit aéronef, toutes ces informations étant fournies par l'ordinateur de bord de l'aéronef.

Le dispositif suivant l'invention comporte également des moyens de régulation (8) du débit de gaz inerte du générateur de gaz inerte (1) et, accessoirement, de la consommation en énergie dudit générateur de gaz inerte (1) et des moyens de distribution contrôlée (9) du gaz inerte dans les différents réservoirs (3) de carburant et/ou dans les différents compartiments d'un réservoir (3) de carburant de l'aéronef. On notera que les moyens de régulation (8) du débit de gaz inerte du générateur de gaz inerte (1) et, accessoirement, de la consommation en énergie dudit générateur de gaz inerte sont connectés à une source de pression en air procurant une source d'énergie, ladite source de pression consistant par exemple dans une pression venant du réacteur de l'aéronef et/ou un compresseur électrique et/ou un turbocompresseur.

Il va de soi que la source d'énergie pourra consister dans une source d'énergie électrique telle qu'une batterie par exemple ou dans une source d'énergie mécanique telle qu'un arbre tournant pas exemple.

De plus, le dispositif comprend une unité de gestion (10) connectée aux moyens de détermination (4) du besoin en gaz inerte du ou des réservoirs (3) de l'aéronef, aux moyens de régulation (8) du débit de gaz inerte du générateur de gaz inerte (1) et aux moyens de distribution contrôlée (9) du gaz inerte dans les différents réservoirs (3) de carburant. Ladite unité de gestion (10) comporte un premier algorithme pour déterminer en temps réel une consigne du débit de gaz inerte du générateur de gaz inerte (1) en fonction du besoin en gaz inerte du ou des réservoirs (3) de l'aéronef transmis par les moyens de détermination (4) du besoin en gaz inerte, lesdites consignes étant transmises en temps réel aux moyens de régulation (8) du débit de gaz inerte du générateur de gaz inerte (1) et de la consommation en énergie dudit générateur de gaz inerte (1), et un second algorithme pour déterminer les consignes de contrôle de la distribution en gaz inerte auxdits moyens de distribution contrôlée (9) du gaz inerte dans les différents réservoirs (3) de carburant et/ou dans les différents compartiments d'un réservoir (3) de carburant de l'aéronef.

Accessoirement, le premier algorithme de l'unité de gestion (10) peut également permettre de déterminer en temps réel une consigne de la consommation énergétique du générateur de gaz inerte (1) en fonction du besoin en gaz inerte du ou des réservoirs (3) de l'aéronef transmis par les moyens de détermination (4) du besoin en gaz inerte.

On expliquera maintenant le fonctionnement du dispositif suivant l'invention en référence à la figure 2.

Dans une première étape, les moyens de détermination (4) calculent le besoin en gaz inerte en fonction des mesures du volume de carburant présent dans le ou les réservoirs (3) et/ou dans les différents compartiments d'un réservoir (3) et/ou de la quantité d'oxygène présente dans le ou les réservoirs (3) et/ou dans les différents compartiments d'un réservoir (3), et/ou la température, mesurées aux moyens des capteurs (5) et des informations relatives au vol de l'aéronef (altitude et/ou vitesse et/ou phase de vol).

Cette information du besoin en gaz inerte est transmise en temps réel à l'unité de gestion (10) qui détermine, dans une seconde étape, en temps réel une consigne du débit de gaz inerte du générateur de gaz inerte (1) et, accessoirement, de la consommation énergétique dudit générateur de gaz inerte (1) en fonction du besoin en gaz inerte du ou des réservoirs (3) de l'aéronef transmis par les moyens de détermination (4) du besoin en gaz inerte précédemment calculée. Lesdites consignes sont transmises en temps réel aux moyens de régulation (8) du débit de gaz inerte du générateur de gaz inerte (1) et de la consommation en énergie dudit générateur de gaz inerte (1). L'unité de gestion (10) détermine également des consignes de contrôle de la distribution en gaz inerte dans les différents réservoirs (3) de carburant et/ou dans les différents compartiments d'un réservoir (3) de carburant de l'aéronef. Ces consignes sont transmises en temps réel aux moyens de distribution contrôlée (9) du gaz inerte dans les différents réservoirs (3) de carburant et/ou dans les différents compartiments d'un réservoir (3) de carburant de l'aéronef. Les moyens de distribution contrôlée (9) pilotent alors l'ouverture et la fermeture des électrovannes du circuit de distribution de gaz inerte vers les différents réservoirs (3) de carburant et/ou dans les différents compartiments d'un réservoir (3) de carburant de l'aéronef.

On comprend bien que le dispositif suivant l'invention permet d'adapter la distribution de gaz inerte au besoin réel en gaz inerte. De cette manière, le dispositif suivant l'invention permet de réduire indirectement la consommation de carburant.

Il est bien évident que les exemples que l'on vient de donner ne sont que des illustrations particulières et en aucun cas limitatif quant au domaine d'application de l'invention.

## Revendications

1. Dispositif d'inertage d'un ou plusieurs réservoirs (3) de carburant d'un aéronef, ledit dispositif comprenant au moins :
- un générateur de gaz inerte (1) alimenté avec de l'air de purge détourné de moteurs et/ou de l'air de la cabine des passagers,
- des moyens de détermination (4) du besoin en gaz inerte du ou des réservoirs (3) de l'aéronef en temps réel au cours de l'utilisation dudit aéronef,
- des moyens de régulation (8) du débit du générateur de gaz inerte (1),
- des moyens de distribution contrôlée (9) du gaz inerte dans les différents réservoirs (3) et/ou dans différents compartiments d'un réservoir (3) et,
- une unité de gestion (10), d'une part, apte à déterminer en temps réel une consigne de débit du générateur de gaz inerte (1) en fonction du besoin en gaz inerte du ou des réservoirs (3) transmis par les moyens de détermination (4), ladite consigne étant transmise en temps réel aux moyens de régulation (8), et d'autre part, apte à déterminer des consignes de contrôle de la distribution en gaz inerte dans les différents réservoirs (3) et/ou dans différents compartiments d'un réservoir (3), lesdites consignes étant transmises en temps réel auxdits moyens de distribution contrôlée (9),
***caractérisé* en ce que** les moyens de détermination (4) comprennent :
- une pluralité de capteurs (5) aptes à mesurer en temps réel, dans le ou les réservoirs (3) et/ou dans différents compartiments d'un réservoir (3), le volume de carburant, et/ou la quantité d'oxygène, et/ou la température,
- des moyens de traitement (6) des informations relatives au vol de l'aéronef et,
- des moyens de calcul (7) du besoin en gaz inerte en fonction, des mesures issues des capteurs, et des informations relatives au vol de l'aéronef.

2. Dispositif d'inertage d'un réservoir de carburant suivant la revendication 1 ***caractérisé* en ce que** les informations relatives au vol de l'aéronef consistent dans l'altitude de l'aéronef et/ou la vitesse de l'aéronef et/ou la phase de vol dudit aéronef.

3. Dispositif d'inertage d'un réservoir de carburant suivant l'une quelconque des revendications 1 à 2 ***caractérisé* en ce que** le générateur de gaz inerte (1) consiste en un générateur de gaz à membrane de séparation en zéolithe.

4. Dispositif d'inertage d'un réservoir de carburant suivant l'une quelconque des revendications 1 à 3 ***caractérisé* en ce que** le générateur de gaz inerte (1) consiste en une pile à combustible.

5. Dispositif d'inertage d'un réservoir de carburant suivant l'une quelconque des revendications 1 à 4 ***caractérisé* en ce que** les moyens de régulation (8) du débit de gaz inerte du générateur de gaz inerte (1) sont connectés à une source de pression.

6. Dispositif d'inertage d'un réservoir de carburant suivant la revendication 5 ***caractérisé* en ce que** la source de pression consiste dans une pression venant du réacteur de l'aéronef et/ou un compresseur électrique et/ou un turbocompresseur.

7. Dispositif d'inertage d'un réservoir de carburant suivant l'une quelconque des revendications 1 à 6 ***caractérisé* en ce que** l'unité de gestion (10) comporte un premier algorithme pour déterminer en temps réel une consigne du débit de gaz inerte du générateur de gaz inerte (1) en fonction du besoin en gaz inerte du ou des réservoirs (3) de l'aéronef transmis par les moyens de détermination (4) du besoin en gaz inerte, lesdites consignes étant transmises en temps réel aux moyens de régulation (8) du débit de gaz inerte du générateur de gaz inerte (1), et un second algorithme pour déterminer les consignes de contrôle de la distribution en gaz inerte auxdits moyens de distribution contrôlée (9) du gaz inerte dans les différents réservoirs (3) de carburant et/ou dans les différents compartiments d'un réservoir (3) de carburant de l'aéronef.

8. Dispositif d'inertage d'un réservoir de carburant suivant la revendication 7 ***caractérisé* en ce que** le premier algorithme de l'unité de gestion (10) détermine en temps réel une consigne de la consommation énergétique du générateur de gaz inerte (1) en fonction du besoin en gaz inerte du ou des réservoirs (3) de l'aéronef transmis par les moyens de détermination (4) du besoin en gaz inerte.

9. Procédé d'inertage d'un ou plusieurs réservoirs (3) de carburant d'un aéronef, au moyen d'au moins un générateur de gaz inerte (1) alimenté avec de l'air de purge détourné de moteurs et/ou de l'air de la cabine des passagers, ***caractérisé* en ce qu'**il comporte au moins les étapes suivantes de :
i) détermination en temps réel du besoin en gaz inerte du ou des réservoirs (3) au cours de l'utilisation dudit aéronef
ii) détermination en temps réel d'une consigne de débit du générateur de gaz inerte (1) en fonction du besoin en gaz inerte du ou des réservoirs (3), transmis par des moyens de détermination (4) du besoin en gaz inerte, et précédemment calculé en fonction de mesure en temps réel, dans le ou les réservoirs (3) et/ou dans différents compartiments d'un réservoir (3), du volume de carburant, et/ou de la quantité d'oxygène, et/ou de la température, et des informations relatives au vol de l'aéronef, lesdites consignes étant transmises en temps réel à des moyens de régulation (8) du débit du générateur de gaz inerte (1),
iii) détermination de consignes de contrôle de la distribution en gaz inerte dans les différents réservoirs (3) et/ou dans différents compartiments d'un réservoir (3), lesdites consignes étant transmises en temps réel à des moyens de distribution contrôlée (9) du gaz inerte dans les différents réservoirs (3) et/ou dans différents compartiments d'un réservoir (3).

## Patentansprüche

1. Vorrichtung zur Inertisierung eines oder mehrerer Kraftstofftanks (3) eines Luftfahrzeugs, bestehend aus mindestens:
- einem Inertgaserzeuger (1), der mit Zapfluft gespeist wird, welche von Triebwerken und/oder Luft aus der Passagierkabine umgelenkt wird,
- Mitteln zum Feststellen (4) des Bedarf an Inertgas des oder der Luftfahrzeugtanks (3) in Echtzeit während des Betriebs dieses Luftfahrzeugs,
- Mitteln zur Regulierung (8) des Durchsatzes des Inertgaserzeugers (1),
- Mitteln zur gesteuerten Abgabe (9) von Inertgas an die verschiedenen Tanks (3) und/oder an die verschiedenen Zellen eines Tanks (3) und
- einer Verwaltungseinheit (10), die einerseits befähigt ist, einen Soll-Durchsatz des Inertgaserzeugers (1) in Abhängigkeit vom Inertgasbedarf des oder der Tanks (3) festzulegen, welcher von den Mitteln zum Feststellen (4) übertragen wurde, wobei der Sollwert in Echtzeit an die Mittel zur Regulierung (8) übertragen wird, und die andererseits befähigt ist, Sollwerte zur Steuerung der Inertgasabgabe an die verschiedenen Tanks (3) und/oder an die verschiedenen Zellen eines Tanks (3) festzulegen, wobei diese Sollwerte in Echtzeit an die Mittel zur gesteuerten Abgabe (9) übertragen werden,
***dadurch gekennzeichnet,* dass** die Mittel zum Festlegen (4):
- mehrere Messfühler (5) umfassen, die befähigt sind, in Echtzeit das Kraftstoffvolumen und/oder die Sauerstoffmenge und/oder die Temperatur in dem oder den Tanks (3) und/oder in den verschiedenen Zellen eines Tanks (3) zu messen,
- Mittel zur Verarbeitung (6) von Flugdaten des Luftfahrzeugs umfassen und
- Mittel zur Berechnung (7) des Bedarfs an Inertgas in Abhängigkeit von den Messfühler-Messungen und den Flugdaten des Luftfahrzeugs umfassen.

2. Vorrichtung zur Inertisierung eines Kraftstofftanks nach diesem Anspruch, ***dadurch gekennzeichnet,* dass** die Flugdaten des Luftfahrzeugs aus der Flughöhe des Luftfahrzeugs und/oder der Geschwindigkeit des Luftfahrzeugs und/oder der Flugphase dieses Luftfahrzeugs bestehen.

3. Vorrichtung zur Inertisierung eines Kraftstofftanks nach einem der Ansprüche 1 und 2, ***dadurch gekennzeichnet*,dass** der Inertgaserzeuger (1) aus einen Gaserzeuger mit einer Trennmembran aus Zeolith besteht.

4. Vorrichtung zur Inertisierung eines Kraftstofftanks nach einem der Ansprüche 1 bis 3, ***dadurch gekennzeichnet*,dass** der Gaserzeuger (1) aus einer Brennstoffzelle besteht.

5. Vorrichtung zur Inertisierung eines Kraftstofftanks nach einem der Ansprüche 1 bis 4, ***dadurch gekennzeichnet*,dass** die Mittel zur Regulierung (8) des Inertgasdurchsatzes des Inertgaserzeugers (1) an eine Druckquelle angeschlossen sind.

6. Vorrichtung zur Inertisierung eines Kraftstofftanks nach Anspruch 5, ***dadurch gekennzeichnet,* dass** die Druckquelle aus Druck besteht, der vom Reaktor des Luftfahrzeugs und/oder einem elektrischen Kompressor und/oder einem Turbokompressor stammt.

7. Vorrichtung zur Inertisierung eines Kraftstofftanks nach einem der Ansprüche 1 bis 6, ***dadurch gekennzeichnet,* dass** die Verwaltungseinheit (10) einen ersten Algorithmus beinhaltet, um in Echtzeit einen Inertgas-Solldurchsatz des Inertgaserzeugers (1) in Abhängigkeit vom Inertgasbedarf des oder der Tanks (3) des Luftfahrzeugs festzulegen, welcher von den Mitteln zum Feststellen (4) des Inertgasbedarfs übertragen wurde, wobei diese Sollwerte in Echtzeit an die Mittel zur Regulierung (8) des Inertgasdurchsatzes des Inertgaserzeugers (1) übertragen werden, und einen zweiten Algorithmus beinhaltet, um die Sollwerte zur Steuerung der Inertgasabgabe an die Mittel zur gesteuerten Abgabe (9) des Inertgases an die verschiedenen Kraftstofftanks (3) und/oder an die verschiedenen Zellen eines Kraftstofftanks (3) des Luftfahrzeugs festzulegen.

8. Vorrichtung zur Inertisierung eines Kraftstofftanks nach Anspruch 7, ***dadurch gekennzeichnet,* dass** der erste Algorithmus der Verwaltungseinheit (10) in Echtzeit einen Soll-Energieverbrauch des Inertgaserzeugers (1) in Abhängigkeit vom Inertgasbedarf des oder der Tanks (3) des Luftfahrzeugs festlegt, welcher von den Mitteln zum Festlegen (4) des Inertgasbedarfs übertragen wurde.

9. Verfahren zur Inertisierung eines oder mehrerer Kraftstofftanks (3) eines Luftfahrzeugs mittels mindestens eines Inertgaserzeugers (1), der mit Zapfluft gespeist wird, welche von Triebwerken und/oder Luft aus der Passagierkabine umgelenkt wird, ***dadurch gekennzeichnet,* dass** das Verfahren mindestens folgende Schritte umfasst:
i) Festlegung in Echtzeit des Inertgasbedarfs des oder der Tanks (3) während des Betriebs des Luftfahrzeugs,
ii) Festlegung in Echtzeit eines Soll-Durchsatzes des Inertgaserzeugers (1) in Abhängigkeit vom Inertgasbedarf des oder der Tanks (3), der von den Mitteln zum Festlegen (4) des Inertgasbedarfs übertragen und zuvor in Abhängigkeit von der Messung in Echtzeit in dem oder den Tanks (3) und/oder in den verschiedenen Zellen eines Tanks (3) des Kraftstoffvolumens und/oder der Sauerstoffmenge und/oder der Temperatur und der Flugdaten des Luftfahrzeugs berechnet wurde, wobei die Sollwerte in Echtzeit an die Mittel zur Regulierung (8) des Durchsatzes des Inertgaserzeugers (1) übertragen werden,
(iii) Festlegung von Sollwerten zur Steuerung der Abgabe des Inertgases an die verschiedenen Kraftstofftanks (3) und/oder an die verschiedenen Zellen eines Kraftstofftanks (3), wobei diese Sollwerte in Echtzeit an die Mittel zur gesteuerten Abgabe (9) des Inertgases an die verschiedenen Tanks (3) und/oder an die verschiedenen Zellen eines Tanks (3) übertragen werden.

## Claims

1. Inerting device for one or several aircraft fuel tanks (3), which device includes at the least:
- an inert gas generator (1) supplied with purged air diverted from the engines and/or air drawn from the passenger compartment,
- means of determining (4) the inert gas requirement of the aircraft tank or tanks (3) in real time during the use of the said aircraft,
- means of regulating (8) the flow rates of the inert gas generator (1),
- means of controlled distribution (9) of the inert gas to the various tanks (3) and/or the various compartments of a tank (3) and,
- a control unit (10), on the one hand, capable of determining in real time a flow setting for the inert gas generator (1) according to the inert gas requirement of the tank or tanks (3) transmitted by determining means (4), said setting of being transmitted in real time to the regulating means (8), and on the other hand, capable of determining the inert gas distribution control settings for the various tanks (3) and/or the various compartments of a tank (3), with said settings being transmitted to the said controlled distribution means (9) in real time.
***characterized in that*** these determination means (4) include:
- a multitude of sensors (5) capable of measuring in real time, in the tank or the tanks (3) and/or the various compartments of a tank (3), the volume of fuel, and/or the quantity of oxygen, and/or the temperature,
- information processing means (6) relative to the flight of the aircraft and,
- means of calculating (7) the inert gas requirement as a function of measurements from the sensors, and information relative to the flight of the aircraft.

2. Inerting device according to claim 1 **characterized in that** the said information concerning the flight of the aircraft consist in the altitude of the aircraft and/or the speed of the aircraft and/or the flight phase of the said aircraft.

3. Inerting device for an aircraft fuel tank according to any of claims 1 to 2
***characterized in that*** the inert gas generator (1) consists of a zeolite separation membrane gas generator.

4. Inerting device for an aircraft fuel tank according to any of claims 1 to 3
***characterized in that*** the inert gas generator (1) consists of a fuel battery cell.

5. Inerting device for an aircraft fuel tank according to any of claims 1 to 4
***characterized in that*** the regulating means (8) of inert gas flow rate of the inert gas generator (1) are connected to a pressure source.

6. Inerting device for an aircraft fuel tank according to claim 5 ***characterized in that*** the pressure source consists of a pressure coming from the aircraft jet engine and/or an electric compressor and/or a turbo compressor.

7. Inerting device for an aircraft fuel tank according to any one of claims 1 to 6
***characterized in that*** the control unit (10) includes a first algorithm for determining in real time an inert gas flow rate setting from the inert gas generator (1) depending on the inert gas requirement of the aircraft tank or tanks (3), transmitted by means of determining (4) the inert gas requirement, said settings being transmitted in real-time to the inert gas flow rate regulation means (8) of the inert gas generator (1), and a second algorithm determining the inert gas distribution control settings to the said means (9) of inert gas controlled distribution into the various fuel tanks (3) of the aircraft and/or the various compartments of a fuel tank (3) on the aircraft.

8. Inerting device for an aircraft fuel tank according to claim 7 **characterized in that** the first algorithm of the control unit (10) determines in real-time an energy consumption setting for the inert gas generator (1) depending on the inert gas requirement of the aircraft tank or tanks (3), transmitted by the means (4) of determining the inert gas requirement.

9. Method for the inerting in one or several fuel tanks (3) on an aircraft, by means of at least one inert gas generator (1) supplied with purged air diverted from the engines and/or the air from the passenger compartment, ***characterized in that*** it includes at least one of the following steps of:
i) determining the inert gas requirement of the aircraft tank or tanks (3) in real time during the use of the said aircraft,
ii) determining in real time an inert gas generator (1) flow rate setting depending on the inert gas requirement of the tank or tanks (3), transmitted by means (4) of determining the inert gas requirement, and previously calculated according to a real-time measurement, to the tank or tanks (3) and/or the various compartments of a tank (3), the volume of fuel, and/or the quantity of oxygen, and/or the temperature, and information relative to the flight of the aircraft, the said settings being transmitted in real time to means (8) of regulating the inert gas generator (1) flow rate,
iii) determining the inert gas distribution control settings in the various tanks (3) and/or in the various compartments of a tank (3), the said settings being transmitted in real time to the inert gas controlled distribution means (9) in the various tanks (3) and/or in the various compartments of a tank (3).
